# EUROPEAN PATENT SPECIFICATION

(11) **EP 3 491 632 B1**
(45) Date of publication and mention of the grant of the patent: **17.02.2021**
(21) Application number: 17742458.7
(22) Date of filing: 27.07.2017
(51) Int. Cl.: G09B 9/02, G09B 9/04, G09B 9/08, G09B 9/12, G09B 9/10, G09B 9/14

(54) **APPARATUS TO SIMULATE DRIVING AND CORRESPONDING METHOD**
VORRICHTUNG ZUR FAHRSIMULATION UND ENTSPRECHENDES VERFAHREN
APPAREIL PERMETTANT DE SIMULER LA CONDUITE ET PROCÉDÉ CORRESPONDANT

(30) Priority: 28.07.2016 IT 201600079351
(43) Date of publication of application: 05.06.2019
(73) Proprietor: VI-grade GmbH, 64293 Darmstadt (DE)
(72) Inventor: MINEN, Diego, 33100 Udine (IT); BRUSCHETTA, Mattia, 35141 Padova (IT); BERNINI, Stefano, 33100 Udine (IT)
(74) Representative: Petraz, Gilberto Luigi
(86) International application number: PCT/EP2017/069084
(87) International publication number: WO 2018/019964

(56) References cited:
- WO-A1-80/01011
- WO-A1-2013/114179
- GB-A- 2 182 844
- GB-A- 2 328 192
- US-A- 3 309 795
- US-A- 4 059 909

## Description

### FIELD OF THE INVENTION

The present invention concerns an apparatus to simulate driving a land vehicle such as an automobile, a sports car, a bus, a truck, or suchlike.

In particular, the simulation apparatus according to the invention comprises at least one seat in which a driver takes his place and is subjected to different stresses suitable to reproduce actual driving conditions.

### BACKGROUND OF THE INVENTIONa

Land vehicle driving simulators are known, an example of which is described in WO-A-2013/114179, which comprises at least one platform mobile with respect to a support plane and with which at least one seat for a driver is associated.

Between the mobile platform and the support plane movement devices are interposed, provided to move at least the mobile platform and to reproduce the stresses that occur during driving, such as lateral displacement, acceleration/deceleration and swerving.

In accordance with the solution described in WO-A-2013/114179, the seat is associated with the mobile platform by means of additional hexapod-shaped movement devices that allow to simulate, in combination with the movement devices associated with the support plane and the mobile platform, the stresses to which a driver is normally subjected, such as rolling, swerving, pitching, acceleration/deceleration.

Due to physical-mechanical limitations, these types of dynamic driving simulators are typically used to reproduce transient phenomena.

One rather strong disadvantage of this type of simulator is that it is impossible to provide the driver with so-called "sustained accelerations", that is, accelerations that extend over time. The absence of sustained accelerations is one of the main factors that contribute to increasing the conflict between the real and the virtual environment that typically produces malaise in untrained drivers.

Aeronautical simulators are also known, an example of which is described in document US-A-3,309,795, which comprise a seat installed in a fixed position with respect to a plane that supports the simulator and to which inflatable pads are associated.

The inflatable pads are usually associated with the seating plane and the backrest, and are selectively inflated/deflated to induce further stresses on the driver in order to increase his sensation of driving a vehicle.

Indeed it is known that in the aeronautical field the main stresses to which a pilot is subjected are acceleration/deceleration in the three coordinated directions, and rolling.

It is also known that the entity of such stresses are completely different in the aeronautical sector compared with those in the field of land vehicles, if for no other reason than the different dynamics to which a land vehicle is subjected compared to an aeronautical vehicle. Such types of aeronautical simulators, compared to land vehicle simulators, are conceived as static simulators, that is, the seating plane is normally fixed with respect to a support platform. This makes aeronautical simulators unsuitable for an application to land vehicle simulators.

For these reasons, simulators used in the aeronautical field cannot be effectively adopted in the automobile sector or, more generally, on land vehicles.

A simulator is also known, from document GB-A-2.328.192, provided with a base plate, a platform and a plurality of actuators provided to move the platform with respect to the base plate. This document does not describe the positioning of seats on the mobile platform at all.

One purpose of the present invention is to obtain an apparatus suitable to make the simulation of driving a land vehicle performed by a simulator more realistic, thus increasing the exposure time of a driver to accelerations and thus providing a much more realistic simulation of the inertial environment to which the driver is subjected during driving.

Another purpose of the present invention is to obtain a driving simulation apparatus that produces stimuli, or "cues", which are extremely faithful to what usually happens when driving a land vehicle.

Another purpose of the present invention is to provide a driving simulation apparatus able to stimulate the vestibular system and the driver's contact to increase his sense of really driving a vehicle.

Another purpose is to perfect a method for simulating driving a land vehicle that is extremely effective and realistic.

The Applicant has devised, tested and embodied the present invention to overcome the shortcomings of the state of the art and to obtain these and other purposes and advantages.

### SUMMARY OF THE INVENTION

The present invention is set forth and characterized in the independent claims 1 and 8, while the dependent claims describe other characteristics of the invention or variants to the main inventive idea.

In accordance with the above purposes, an apparatus to simulate driving land vehicles comprises:
- a mobile platform,
- a seat installed on the mobile platform and provided with contact surfaces on which, during use, a driver is positioned,
- driving command members which can be actuated by the driver to simulate a driving action, such as acceleration, braking, turning, gear change or other,
- movement devices configured to move the mobile platform with respect to a support plane and to induce dynamic stresses on the driver which involve for example his/her somatosensory apparatuses and in particular his/her vestibular apparatus,
- a driving control unit connected to the driving command members and to said movement devices and configured to command the drive of the movement devices as a function of the actions of the driver on the driving command members.

According to one aspect of the present invention, inflatable pads are associated with at least some of the contact surfaces of the seat and are fluidically connected to a pumping unit that is configured to control the pressure of a gas inside the inflatable pads and to induce tactile pressure stresses on the driver.

Moreover, the apparatus according to the present invention comprises a control and command unit connected to the movement devices, to the driving control unit and to at least the pumping unit and configured to selectively control the driving control unit and the pumping unit in order to combine the dynamic stresses of the movement devices and the tactile pressure stresses of the inflatable pads on the driver. The actuation of the pumping unit is determined in relation to the actuation of the movement devices.

The control and command unit comprises and implements a coupling algorithm able to manage, in real time, at least the movement accelerations of the mobile platform and the tactile pressure stresses of the inflatable pads, by coordinating the actuation of said movement devices and said pumping unit. To this purpose, the coupling algorithm can implement a dynamic model of the seated human body, used to connect contact forces and pressures acting on the driver, to then couple the latter with the vestibular model and the movement of the platform.

The configuration of the simulation apparatus described above is particularly suitable to simulate the dynamics of a land vehicle in which, for example, the stresses of acceleration or deceleration to which a driver is subjected can be greatly extended over time with respect to what occurs in aeronautical simulations.

Indeed, by the combination and synergy of the control and drive of the pumping unit and the driving control unit, it is possible to combine together the stresses that the movement devices and the inflatable pads can induce on the driver so as optimize and increase the accuracy of reproducing a drive simulation.

This combination of actions allows to manage stimuli on the driver affecting different sensory areas, that is, it is able to obtain the integration between a first subsystem, deriving from vestibular perceptions that are activated by dynamic stresses, or inertia, induced by the movement of the mobile platform, and a second subsystem deriving from somatosensory perceptions of the driver that are activated by the pressures generated by the inflatable pads. These pressures of the inflatable pads, in fact, are interpreted by the driver's brain as additional information about the state of the vehicle. The more realistic the reproduction of the pressure, the simpler the driver's ability to use this information will be, reducing the perceived conflict between the real and the virtual, and potentially reducing the occurrence of malaise of the driver during the simulation.

According to possible embodiments of the invention, the apparatus comprises seatbelts associated with the seat and configured to secure the driver. The seatbelts are connected to a tightening device configured to selectively vary the tightening of the seatbelts on the driver. The tightening device in its turn is connected to the control and command unit, which as a function of the driving simulation required manages the tightening mode of the seatbelts.

The control of the traction on the seatbelts, coordinated with a control of the gas pressure in the inflatable pads and a control of the drive of the movement devices allows the driver to perceive the sensation of braking and/or deceleration sensation of the land vehicle. For example, it can be provided that while the driver brakes, he perceives the seatbelts more adhering to his torso, while his back perceives the backrest of the seat distant from it.

The advantages of the present invention are many:
- the movement of the mobile platform, the actuation of the inflatable pads and the possible seatbelts are perfectly coordinated by means of a coupling model or algorithm implemented in the control and command unit;
- the coupling algorithm is optimized to obtain a tactile stimulus that is as near to the real as possible, improving overall realism;
- malaise can also be reduced for non-experienced drivers by increasing the class of potential simulator users;
- the presence of a single coupling algorithm makes the adjustment method simple: no further adjustment is required of the actuation modes of the inflatable pads and possible seatbelts every time the motion cueing model is modified.

The present invention also concerns a method to simulate driving land vehicles that provides to install a seat on a mobile platform, to position a driver resting on contact surfaces of the seat, to detect the actions of the driver on driving command members, to process the actions of the driver on the driving command members with a driving control unit, and to determine the actuation of movement devices to move the mobile platform with respect to a support plane as a function of the actions on the driving command members and to induce dynamic stresses on the driver.

According to one aspect, the method provides to control, using a pumping unit, the pressure of a gas inside inflatable pads associated with at least some of the contact surfaces in order to induce tactile pressure stresses on the driver. Furthermore, a control and command unit is connected to the movement devices, to the driving control unit and to at least the pumping unit and selectively controls the driving control unit and the pumping unit and combines with respect to each other the dynamic stresses of the movement devices and the tactile pressure stresses of the inflatable pads on the driver. The actuation of the pumping unit is determined in relation to the actuation of the movement devices.

According to possible embodiments of the invention, the method provides to secure the driver to the seat with seatbelts and to selectively vary the tightening of the seatbelts on the driver by controlling the tightening action with the control and command unit.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a lateral section view of a driving simulation apparatus in accordance with a possible embodiment of the present invention;
- fig. 2 is a perspective exploded front view of a driving simulation apparatus in accordance with a possible embodiment;
- fig. 3 is a rear perspective view of the apparatus of fig. 2 in an assembled condition;
- figs. 4-8 are perspective views of the apparatus of fig. 2 in different configurations.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

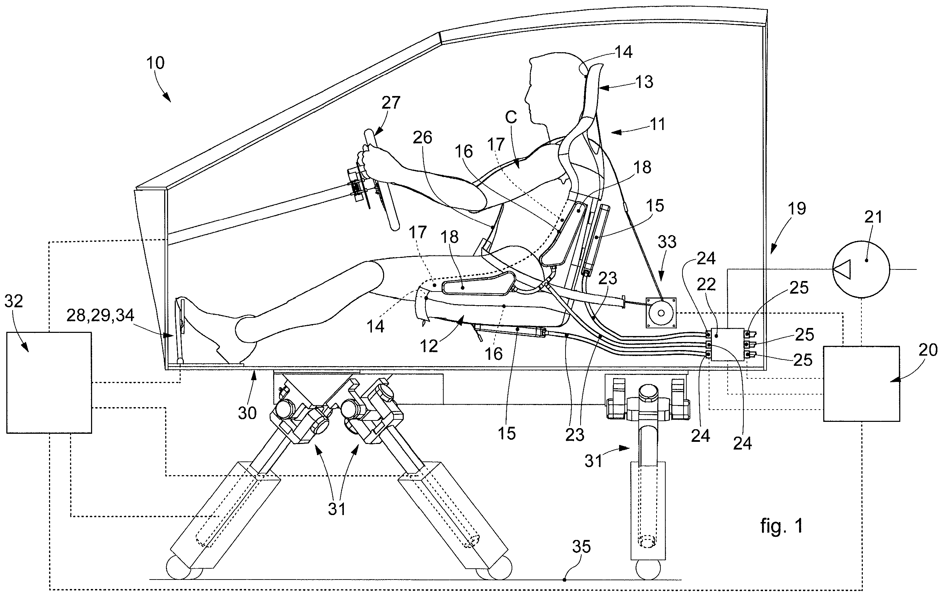

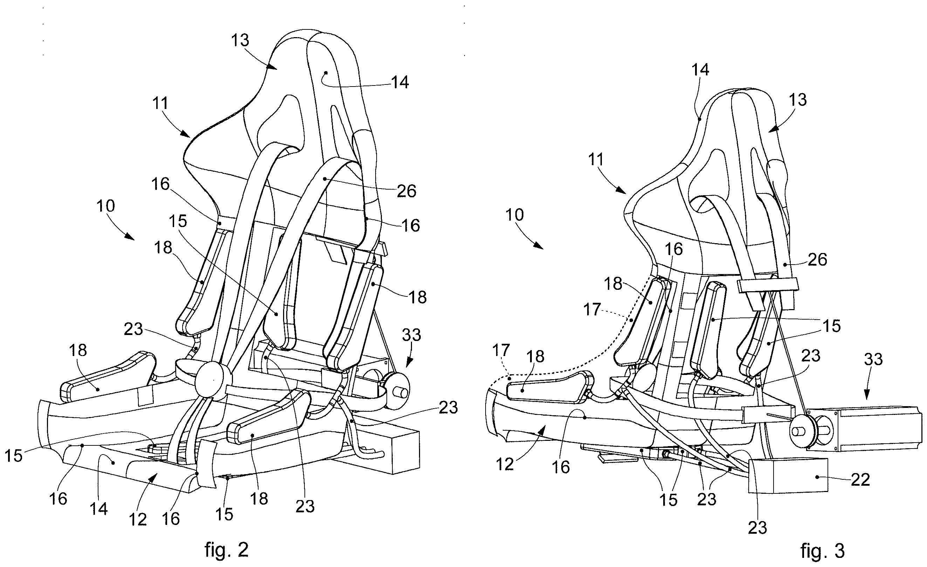

With reference to figs. 1 to 3, we will now describe possible embodiments of the present invention relating to a simulation apparatus 10 for driving land vehicles.

The simulation apparatus 10 comprises a seat 11 provided with contact surfaces 14 on which a driver C is positioned during use.

According to a possible solution of the present invention, the simulation apparatus 10 comprises driving command members 27, 28, 29, 34 drivable by the driver C to simulate driving action, for example acceleration, deceleration, braking, turning, gear change or suchlike.

The driving command members can be selected from a group comprising at least one of either a steering wheel 27, a brake pedal 28, a clutch pedal 29, an accelerator pedal 34 on which the driver C can act with his or her feet or hands, to simulate pre-defined driving conditions.

In particular, it can be provided that sensors configured to detect movements such as for example rotation, pressure, movement or suchlike, induced on the driving command members 27, 28, 29, 34, are associated with each of said driving command members 27, 28, 29, 34 themselves. The data detected by the sensors is subsequently processed to extrapolate subsequent actions to be induced on the driver C as described hereafter.

According to another aspect of the invention, the seat 11 is installed on a mobile platform 30 which in turn is connected to movement devices 31 configured to move the mobile platform 30 with respect to, for example, a support plane 35.

The movement devices 31 can comprise, by way of example only, at least one of either linear actuators, guides, wheels, aerodynamic bearings, or suchlike.

According to possible solutions, the movement devices 31 can comprise a hexapod structure configured to move the mobile platform 30 according to at least six degrees of freedom.

The movement of the mobile platform 30 allows to induce dynamic stresses on the driver such as inertia or centrifugal forces.

The mobile platform 30 can simulate the body of a vehicle, for example an automobile.

A projection screen can also be associated with the mobile platform 30 for projecting images of the environment in which the driver C is immersed while driving.

According to a possible solution, the simulation apparatus 10 comprises a driving control unit 32 connected to the movement devices 31 and the driving command members 27, 28, 29, 34 to control and command the drive modes of the movement devices 31 in relation to the action of the driver C on the driving command members 27, 28, 29, 34.

In particular, by detecting the actions of the driver C on the driving command members 27 28, 29, 34 for example by means of said sensors, the driving control unit 32 allows to translate these actions into the movement of the movement devices 31.

The seat 11 may be provided with a seating plane 12 and at least one backrest 13.

The seating plane 12 and the backrest 13 can be provided with padding elements to make the seat comfortable and ergonomic for the driver C.

The seating plane 12 and the backrest 13 are provided with respective contact surfaces 14 on which the driver C is positioned during use.

The contact surfaces 14 of the seating plane 12 are disposed transversely with respect to the contact surfaces 14 of the backrest 13, to define a concave conformation of the seat 11 to accommodate the driver C.

According to one aspect of the present invention, inflatable pads are associated with at least some of the contact surfaces 14 of the seat 11, in the case shown here first inflatable pads 15 and second inflatable pads 18, selectively inflatable/deflatable to induce on the driver C tactile pressure stresses functional to simulate driving a land vehicle.

According to a possible embodiment, the first inflatable pads 15, which are selectively inflatable with a gas, are associated with the seating plane 12 and the backrest 13, to modify the sensation of pressure that the driver C perceives from the seat 11 following actions of driving simulations.

According to possible embodiments, the first inflatable pads 15 can be integrated into the thickness of the seating plane 12 and/or the backrest 13.

According to possible variant embodiments, the first inflatable pads 15 may be associated externally to the seating plane 12 and/or the backrest 13 on the opposite side with respect to the contact surfaces 14, and the inflation/deflation of the first inflatable pads 15 determines an elastic deformation of the seating plane 12 and/or the backrest 13 which leads to a variation in the sensation of pressure of the seat 11 on the driver C.

According to other embodiments, the first inflatable pads 15 can themselves define the seating plane 12 and the backrest 13, or at least part of these. In still other variant embodiments, the first inflatable pads 15 are positioned above the contact surfaces 14 of the seating plane 12 and of the backrest 13.

According to possible solutions of the present invention, the backrest 13 and/or the seating plane 12 are each provided with at least two first inflatable pads 15 reciprocally distanced from each other on the respective contact surfaces 14 to differentiate on the driver C the tactile pressure stresses, for example to simulate an imbalance to the right or left of driver C himself.

According to possible embodiments, the seating plane 12 and the backrest 13 are provided with respective lateral edges 16 opposite each other and substantially defining the width of the seating plane 12 and the backrest 13.

The seating plane 12 and the backrest 13, in correspondence with their respective lateral edges 16, are provided with lateral containing portions 17 protruding transversely with respect to the respective contact surfaces 14.

The containing portions 17 thus define a lateral containment for the driver C and, in turn, respective contact surfaces 14 with the latter.

The containing portions 17 can comprise and/or be defined by padding elements and/or containing shells.

The containing portions 17 of the seating plane 12 and the backrest 13 can be made in a single body as shown in figs. 1-3 or, alternatively, they can be made as distinct and separate elements.

According to one aspect of the present invention, the second inflatable pads 18 are associated with the containing portions 17, and are selectively inflatable with a gas to modify the sensation of pressure that the containing portions 17 exert on the driver C.

The presence of second inflatable pads 18 on the containing portions 17 allows to increase the efficiency of the stimulation on the driver C to obtain driving simulations that are extremely faithful to the reality of a land vehicle. By way of example only, it can be provided that the second inflatable pads 18 allow to complete the simulation at least of the swerve of a land vehicle.

The combination of actions on the first inflatable pads 15 and on the second inflatable pads 18 allows to simulate the roll, swerve, pitch, acceleration/deceleration that a land vehicle is normally subjected to.

The second inflatable pads 18 can be integrated in, or positioned above, the lateral containing portions 17 of the seating plane 12 and the backrest 13.

According to possible variant embodiments, the second inflatable pads 18 can themselves define the containing portions 17 of the seating plane 12 and the backrest 13.

One, two or more inflatable pads 18 can be associated with each containing portion 17 of the seating plane 12 and/or the backrest 13.

According to another aspect of the present invention, the simulation apparatus 10 comprises a pumping unit 19 configured to control the pressure of a gas inside the first inflatable pads 15 and the second inflatable pads 18 and therefore to induce tactile pressure stresses on the driver C.

According to some embodiments of the invention, the pumping unit 19 is fluidically connected to the first inflatable pads 15 and to the second inflatable pads 18 and is configured to control the pressure of the gas inside them.

The pumping unit 19, in fact, allows to selectively introduce and/or release the gas contained in the first inflatable pads 15 and the second inflatable pads 18, so as to adjust the pressure in the latter.

According to an advantageous solution, air is introduced into the first inflatable pads 15 and the second inflatable pads 18.

According to a possible embodiment, the pumping unit 19 comprises a pumping device 21 to pump the gas, or air, fluidically connected to a distributor device 22.

The pumping device 21 can comprise a compressor, for example rotary or alternative type.

The distributor device 22 is connected, with respective pipes 23, to the first inflatable pads 15 and to the second inflatable pads 18.

The simulation apparatus 10 also comprises a control and command unit 20 connected at least to the movement devices 31, the pumping unit 19 and the driving control unit 32 and configured to control both the pumping unit 19 and also the driving control unit 32, and to combine the dynamic stresses induced by the movement devices 31 and the tactile pressure stresses induced by the inflatable pads 15 and 18 on the driver C. The actuation of the pumping unit 19 is also determined in relation to the actuation of the movement devices 31.

Advantageously, the control and command unit 20 is configured to estimate the action modes on the movement devices 31 and the inflatable pads 15, 18.

The control and command unit 20 can comprise and implement at least one coupling algorithm to coordinate the actuation of the movement devices 31 and of the pumping unit 19.

The coupling algorithm combines the tactile perceptive dynamics of a person with a series of mass spring damper models suitable to emulate the reaction of the human body when subjected to accelerations and rotations. The results obtained by this coupling algorithm subsequently determine the tactile pressure actions to be imparted to the seat 11 by means of the inflatable pads 15, 18, and the entities of movement, that is, speeds and accelerations to be imparted to the mobile platform 30 by means of the movement devices 31.

The coupling algorithm has been developed by taking into consideration, by way of example only, the inertial reaction of the driver C, the frictions that are generated between the body of the driver C and the seat 11, the material of the seat 11, the nonlinear rigidity and the damping effect of the body of the driver C.

Furthermore, the control and command unit 20 can receive information regarding actions on the driving command members 27, 28, 29, 34 and, as a function of this information, manages both the actuation of the driving control unit 32 and therefore conditions the functioning of the movement devices 31 and the actuation of the inflatable pads 15, 18 and therefore conditions the functioning of the pumping unit 19. For example, it is possible to provide a continuous exchange of the data detected and processed by the driving control unit 32 through the sensors associated with the driving command members 27, 28, 29, 34, to supply them to the control and command unit 20. Indeed, between the actions induced by the movement devices 31 and the inflation and deflation of the first inflatable pads 15 and the second inflatable pads 18 there is a complete synergy in order to optimize the driving simulation and make it effective.

In other embodiments, the control and command unit 20 can be configured to independently control and command the pressure of the gases in the first inflatable pads 15 and in the second inflatable pads 18.

In particular, by means of the control and command unit 20, it is possible to send commands to the pumping unit 19 so that it suitably adjusts the pressure in the first inflatable pads 15 and in the second inflatable pads 18.

According to a possible solution, the control and command unit 20 is connected to the distributor device 22 to selectively control the supply of gas in the first inflatable pads 15 and the second inflatable pads 18 and to adjust the pressure thereof independently.

According to possible solutions, each inflatable pad, whether it is comprised among the first inflatable pads 15 or among the second inflatable pads 18, can be independently connected to the distributor device 22 which is configured to manage the level of inflation of each of them. This solution allows to precisely control the level of inflation of each pad, and in this way it can also manage precisely the required simulation modes.

According to a possible variant embodiment, the distributor device 22 comprises distributor valves 24 fluidically connected to the first inflatable pads 15 and to the second inflatable pads 18 and selectively drivable by the control and command unit 20.

The distributor valves 24 can comprise servo-commanded valves, for example electro valves, pneumatic drive valves, or suchlike.

The distributor valves 24 can be connected to the first inflatable pads 15 and to the second inflatable pads 18 by means of the pipes 23.

Each pad, whether it is one of the first inflatable pads 15 or the second inflatable pads 18, can be connected to a respective distributor valve 24, and each of the latter is selectively commanded by the control and command unit 20 according to the specific simulations required.

According to possible embodiments, the distributor device 22 comprises discharge valves 25 fluidically connected to the first inflatable pads 15 and to the second inflatable pads 18 and selectively drivable by the control and command unit 20 to control the discharge of gas from the first inflatable pads 15 and second inflatable pads 18.

According to possible embodiments, the discharge valves 25 can comprise servo-commanded valves.

In particular, the control and command unit 20, suitably coordinating the management of the distributor valves 24 and the discharge valves 25, allows to independently manage the gas pressure in the first inflatable pads 15 and in the second inflatable pads 18 by introducing or respectively discharging the gas.

According to a possible solution, the apparatus comprises seatbelts 26 associated with the seat 11 and configured to secure the driver C.

The seatbelts 26 are connected to a tightening device 33 configured to selectively vary the tension of the seatbelts 26 on the driver C.

The tightening device 33 is, in turn, connected to the control and command unit 20 which, in relation to the simulation conditions, releases or tightens the seatbelts 26, for example to simulate a forward or backward movement of the driver C.

During the simulation it is therefore possible to induce on the driver C three different stresses, that is, the dynamic stresses due to the movement devices, the pressure stresses due to the inflatable pads 15 and 18, and the tension stresses due to the seatbelts 26. By suitably coordinating these stresses it is possible to optimize the drive of the movement devices 31 and increase the exposure time of the driver C to the simulation stresses.

If the simulation apparatus 10 provided only the action of the movement devices 31, for them to have a high exposure time of the driver C, they would require big movement travels of the mobile platform 30, with all the problems connected therewith.

With the present invention, therefore, it is possible to obtain extremely compact simulation apparatuses 10, which at the same time are able to expose the driver C to simulation stresses extending over time.

The present invention also concerns a method for simulating driving using the apparatus 10.

Generally, the method is based on actions commanded by the driver C based on the driving travel that is being performed, and in general corresponding to an acceleration, deceleration caused by gear change, right or left turn, braking, or combinations thereof.

The driver C imparts actions by means of the driving command members 27, 28, 29, 34, and these actions are converted into signals sent to the driving control unit 32 and to the control and command unit 20.

These data are processed to manage the functioning at least of the movement devices 31 and the pumping unit 19.

In particular, the data provided to manage the functioning of the pumping unit 19 can be converted at least into values of flow rate and air pressure to be sent to the first inflatable pads 15 and to the second inflatable pads 18.

The control and command unit 20 manages the drive of the distributor device 22, for example of the distributor valves 24 and the discharge valves 25, to adjust the air pressure to be maintained and/or generated in the first inflatable pads 15 and in the second inflatable pads 18, as a function of the intensity of the acceleration, deceleration, steering, braking, or combinations thereof.

Furthermore, the data detected by the action on the driving command members 27, 28, 29, 34 can be processed by the control and command unit 20 to generate particular tension conditions to be transferred to the tightening device 33 of the seatbelts 26.

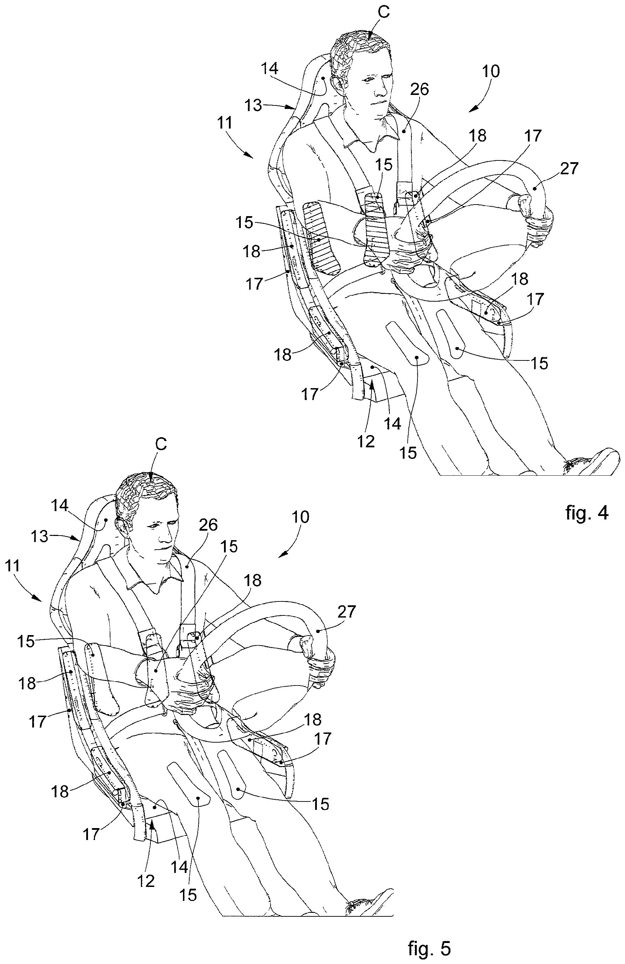

In the case of simulation of acceleration of a land vehicle (fig. 4), the first inflatable pads 15 positioned in correspondence with the backrest 13 are inflated according to the intensity of the acceleration, while the remaining first inflatable pads 15 of the seating plane 12 and the second inflatable pads 18 are deflated.

In this way the driver C perceives his back pressed against the backrest 13.

In the case of simulation of a deceleration (fig. 5), in particular during the incremental shift of the driving gear, the first inflatable pads 15 positioned in correspondence with the backrest 13 are deflated when a negative longitudinal acceleration is developed, for example when the clutch pedal 29 is pressed, and are then deflated again when the longitudinal acceleration returns positive, after the change of gear. The remaining first inflatable pads 15 and the second inflatable pads 18 are deflated.

In this way, the perception of the driver C of being in contact with the backrest 13 decreases.

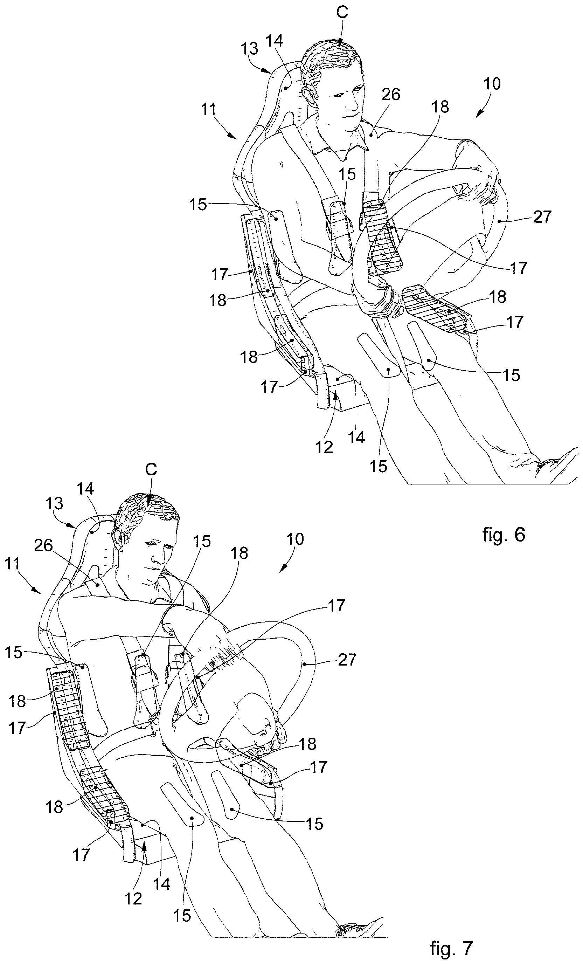

In the case of simulation of a right turn (fig. 6) or a left turn (fig. 7), the second inflatable pads 18 positioned in correspondence with the containing portion 17 respectively left (fig. 6) or right (fig. 7) are inflated according to the lateral acceleration developed, while the first inflatable pads 15 and the remaining second inflatable pads 18 are deflated.

In the case of simulation of possible discontinuities in the ground, the first inflatable pads 15 positioned in correspondence with the seating plane 12 are inflated or deflated.

In these four cases, the seatbelts 26 are in the inactive position.

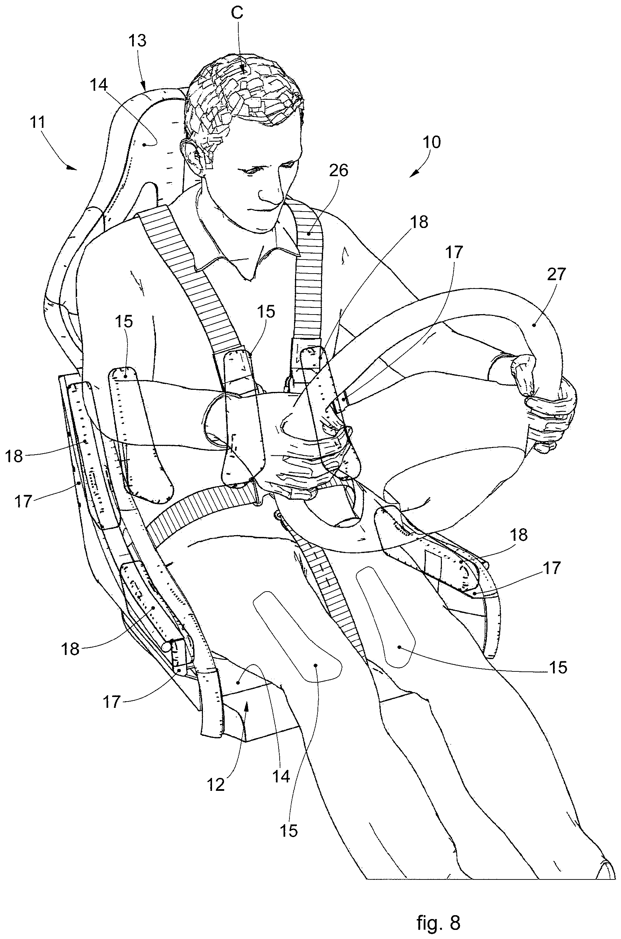

In the case of simulation of braking (fig. 8), the first inflatable pads 15 and the second inflatable pads 18 are deflated, while the seatbelts 26 are in a traction position, that is, they are perceived by the driver C as being very adherent to him.

It is clear that modifications and/or additions of parts may be made to the apparatus 10 and method for simulating driving land vehicles as described heretofore, without departing from the field and scope of the present invention.

It is also clear that, although the present invention has been described with reference to some specific examples, a person of skill in the art shall certainly be able to achieve many other equivalent forms of apparatus 10 and method for simulating driving land vehicles, having the characteristics as set forth in the claims and hence all coming within the field of protection defined thereby.

## Claims

1. Apparatus to simulate driving land vehicles comprising a mobile platform (30); a seat (11) installed on said mobile platform (30) and provided with contact surfaces (14) on which, during use, a driver (C) is positioned; driving command members (27, 28, 29, 34) which can be actuated by said driver (C) to simulate a driving action; movement devices (31) configured to move said mobile platform (30) with respect to a support plane (35) and to induce dynamic stresses on said driver (C); and a driving control unit (32) connected to said driving command members (27, 28, 29, 34) and to said movement devices (31) and configured to command the drive of said movement members (31) as a function of the actions of the driver (C) on said driving command members (27, 28, 29, 34), **characterized in that** inflatable pads (15, 18) are associated with at least some of said contact surfaces (14) and are fluidically connected to a pumping unit (19) configured to control the pressure of a gas inside said inflatable pads (15, 18) and to induce tactile pressure stresses on said driver (C), **and in that** said seat (11) comprises a seating plane (12) and a backrest (13) provided with said contact surfaces (14) and with which first inflatable pads (15) are associated, fluidically connected to said pumping unit (19), wherein in correspondence with their respective lateral edges (16), said seating plane (12) and said backrest (13) are provided with lateral containing portions (17) protruding transversely with respect to said contact surfaces (14), second inflatable pads (18) being associated with said containing portions (17), and connected to said pumping unit (19) to control the pressure of the gas inside said second inflatable pads (18), **and in that** it comprises a control and command unit (20) connected to said movement devices (31), to said driving control unit (32) and to at least said pumping unit (19) and configured to selectively control said driving control unit (32) and said pumping unit (19) and to combine the dynamic stresses of said movement devices (31) and the tactile pressure stresses of said inflatable pads (15, 18) on said driver (C), the actuation of said pumping unit (19) being determined in relation to the actuation of said movement devices (31).

2. Apparatus as in claim 1, **characterized in that** said control and command unit (20) comprises and implements a coupling algorithm able to manage, in real time, at least the movement accelerations of said mobile platform (30) and the tactile pressure stresses of said inflatable pads (15, 18), by coordinating the actuation of said movement devices (31) and said pumping unit (19).

3. Apparatus as in claim 1 or 2, **characterized in that** it comprises seatbelts (26) associated with said seat (11) and configured to secure said driver (C), **and in that** said seatbelts (26) are connected to a tightening device (33) configured to selectively vary the tightening of said seatbelts (26) on said driver (C), said tightening device (33) being connected to said control and command unit (20).

4. Apparatus as in claim 1, **characterized in that** said control and command unit (20) is configured to selectively and independently control the pressure of said first inflatable pads (15) and of said second inflatable pads (18).

5. Apparatus as in any claim hereinbefore, **characterized in that** said pumping unit (19) comprises a pumping device (21) of said gas, fluidically connected to a distributor device (22), said distributor device (22) being connected, with respective pipes (23), to said first inflatable pads (15) and to said second inflatable pads (18), **and in that** said control and command unit (20) is connected to said distributor device (22) to selectively control the feed of said gas to said first inflatable pads (15) and said second inflatable pads (18).

6. Apparatus as in claim 5, **characterized in that** said distributor device (22) comprises distributor valves (24) and discharge valves (25) fluidically connected to said first inflatable pads (15) and said second inflatable pads (18) and selectively drivable by said control and command unit (20) to respectively control the introduction and discharge of said gas to/from said first inflatable pads (15) and said second inflatable pads (18).

7. Apparatus as in any claim hereinbefore, **characterized in that** said driving command members are chosen from a group comprising at least one of either a steering wheel (27), a brake pedal (28), a clutch (29) or an accelerator pedal (34).

8. Method to simulate driving land vehicles that provides to install a seat (11) on a mobile platform (30), to position a driver (C) on contact surfaces (14) of said seat (11), to detect the actions of said driver (C) on driving command members (27, 28, 29, 34), to process the actions of said driver (C) on said driving command members (27, 28, 29, 34) with a driving control unit (32), and to determine the actuation of movement devices (31) to move said mobile platform (30) with respect to a support plane (35) as a function of the actions of said driver (C) on said driving command members (27, 28, 29, 34) and to induce dynamic stresses on said driver (C), **characterized in that,** using a pumping unit (19), it provides to control the pressure of a gas inside inflatable pads (15,18) associated with at least some of said contact surfaces (14) in order to induce tactile pressure stresses on said driver (C), first inflatable pads (15) being associated with said contact surfaces (14) and second inflatable pads (18) being associated with containing portions (17) protruding transversely with respect to said contact surfaces (14), **in that** a control and command unit (20) is connected to said movement devices (31), to said driving control unit (32) and to at least said pumping unit (19) and selectively controls said driving control unit (32) and said pumping unit (19) and combines with respect to each other the dynamic stresses of said movement devices (31) and the tactile pressure stresses of said inflatable pads (15, 18) on said driver (C), **and in that** the actuation of said pumping unit (19) is determined in relation to the actuation of said movement devices (31).

9. Method as in claim 8, **characterized in that** it provides to secure said driver (C) to said seat (11) with seatbelts (26) and to selectively vary the tightening of said seatbelts (26) on said driver (C) by controlling the tightening action with said control and command unit (20).

## Patentansprüche

1. Vorrichtung zur Simulation des Fahrens von Landfahrzeugen, umfassend eine bewegliche Plattform (30); einen Sitz (11), der auf der beweglichen Plattform (30) installiert ist und mit Kontaktflächen (14) versehen ist, auf welchen, während der Benutzung, ein Fahrer (C) positioniert ist; Fahrsteuerelemente (27, 28, 29, 34), die vom Fahrer (C) betätigt werden können, um eine Fahrhandlung zu simulieren; Bewegungsvorrichtungen (31), die dazu eingerichtet sind, die bewegliche Plattform (30) im Hinblick auf eine Stützebene (35) zu bewegen und dynamische Belastungen auf den Fahrer (C) zu bewirken; und eine Fahrsteuerungseinheit (32), die mit den Fahrsteuerelementen (27, 28, 29, 34) und mit den Bewegungsvorrichtungen (31) verbunden ist und dazu eingerichtet ist, das Fahren der Bewegungsvorrichtungen (31) in Abhängigkeit von den Handlungen des Fahrers (C) auf die Fahrsteuerelemente (27, 28, 29, 34) zu steuern, **dadurch gekennzeichnet, dass** aufblasbare Kissen (15, 18) zumindest einigen der Kontaktflächen (14) zugeordnet sind und mit einer Pumpeneinheit (19) fluidverbunden sind, die dazu eingerichtet ist, den Druck eines Gases innerhalb der aufblasbaren Kissen (15, 18) zu steuern und Berührungsdruckbelastungen auf den Fahrer (C) zu bewirken, **und dass** der Sitz (11) eine Sitzebene (12) und eine Rückenlehne (13) umfasst, die mit den Kontaktflächen (14) versehen sind und denen erste aufblasbare Kissen (15) zugeordnet sind, und die mit der Pumpeneinheit (19) fluidverbunden sind, worin an ihren jeweiligen Seitenkanten (16) die Sitzebene (12) und die Rückenlehne (13) mit seitlichen Einfassungsabschnitten (17) versehen sind, die im Hinblick auf die Kontaktflächen (14) quer vorstehen, wobei zweite aufblasbare Kissen (18) den Einfassungsabschnitten (17) zugeordnet sind und mit der Pumpeneinheit (19) verbunden sind, um den Druck des Gases innerhalb der zweiten aufblasbaren Kissen (18) zu steuern, **und dass** sie eine Steuerungs- und Befehlseinheit (20) umfasst, die mit den Bewegungsvorrichtungen (31), mit der Fahrsteuerungseinheit (32) und zumindest mit der Pumpeneinheit (19) verbunden ist und dazu eingerichtet ist, die Fahrsteuerungseinheit (32) und die Pumpeneinheit (19) selektiv zu steuern und die dynamischen Belastungen der Bewegungsvorrichtungen (31) und die Berührungsdruckbelastungen der aufblasbaren Kissen (15, 18) auf den Fahrer (C) zu kombinieren, wobei die Betätigung der Pumpeneinheit (19) in Bezug auf die Betätigung der Bewegungsvorrichtungen (31) bestimmt wird.

2. Vorrichtung nach Anspruch 1, **dadurch gekennzeichnet, dass** die Steuerungs- und Befehlseinheit (20) einen Kopplungsalgorithmus umfasst und implementiert, der in Echtzeit zumindest die Bewegungsbeschleunigungen der beweglichen Plattform (30) und die Berührungsdruckbelastungen der aufblasbaren Kissen (15, 18) dadurch verwalten kann, dass die Betätigung der Bewegungsvorrichtungen (31) und der Pumpeneinheit (19) aufeinander abgestimmt werden.

3. Vorrichtung nach Anspruch 1 oder 2, **dadurch gekennzeichnet, dass** sie Anschnallgurte (26) umfasst, die dem Sitz (11) zugeordnet sind und dazu eingerichtet sind, den Fahrer (C) zu sichern, **und dass** die Anschnallgurte (26) mit einer Straffungsvorrichtung (33) verbunden sind, die dazu eingerichtet ist, die Straffung der Anschnallgurte (26) an dem Fahrer (C) selektiv zu ändern, wobei die Straffungsvorrichtung (33) mit der Steuerungs- und Befehlseinheit (20) verbunden ist.

4. Vorrichtung nach Anspruch 1, **dadurch gekennzeichnet, dass** die Steuerungs- und Befehlseinheit (20) dazu eingerichtet ist, den Druck der ersten aufblasbaren Kissen (15) und der zweiten aufblasbaren Kissen (18) selektiv und unabhängig zu steuern.

5. Vorrichtung nach einem der vorhergehenden Ansprüche, **dadurch gekennzeichnet, dass** die Pumpeneinheit (19) eine Pumpenvorrichtung (21) des Gases umfasst, die mit einer Verteilervorrichtung (22) fluidverbunden ist, wobei die Verteilervorrichtung (22), mit jeweiligen Rohren (23), mit den ersten aufblasbaren Kissen (15) und mit und den zweiten aufblasbaren Kissen (18) verbunden ist, **und dass** die Steuerungs- und Befehlseinheit (20) mit der Verteilervorrichtung (22) verbunden ist, um die Zuführung des Gases an die ersten aufblasbaren Kissen (15) und an die zweiten aufblasbaren Kissen (18) selektiv zu steuern.

6. Vorrichtung nach Anspruch 5, **dadurch gekennzeichnet, dass** die Verteilervorrichtung (22) Verteilerventile (24) und Auslassventile (25) umfasst, die mit den ersten aufblasbaren Kissen (15) und den zweiten aufblasbaren Kissen (18) fluidverbunden sind und die von der Steuerungs- und Befehlseinheit (20) selektiv antreibbar sind, um jeweils den Einlass und den Auslass des Gases in die/von den ersten aufblasbaren Kissen (15) und zweiten aufblasbaren Kissen (18) zu steuern.

7. Vorrichtung nach einem der vorhergehenden Ansprüche, **dadurch gekennzeichnet, dass** die Fahrsteuerelemente aus einer Gruppe ausgewählt sind, die zumindest eines bzw. eine von entweder einem Lenkrad (27), einem Bremspedal (28), einer Kupplung (29) oder einem Gaspedal (34) umfasst.

8. Verfahren zur Simulation des Fahrens von Landfahrzeugen, das vorsieht, einen Sitz (11) auf einer beweglichen Plattform (30) zu installieren, einen Fahrer (C) auf Kontaktflächen (14) des Sitzes (11) zu positionieren, die Handlungen des Fahrers (C) auf Fahrsteuerelemente (27, 28, 29, 34) zu detektieren, die Handlungen des Fahrers (C) auf die Fahrsteuerelemente (27, 28, 29, 34) mit einer Fahrsteuerungseinheit (32) zu verarbeiten, und die Betätigung von Bewegungsvorrichtungen (31) zu bestimmen, um die bewegliche Plattform (30) in Hinblick auf eine Stützebene (35) in Abhängigkeit von den Handlungen des Fahrers (C) auf die Fahrsteuerelemente (27, 28, 29, 34) zu bewegen und dynamische Belastungen auf den Fahrer (C) zu bewirken, **dadurch gekennzeichnet, dass** unter Verwendung einer Pumpeneinheit (19) es vorsieht, den Druck eines Gases innerhalb von aufblasbaren Kissen (15, 18) zu steuern, die zumindest einigen der Kontaktflächen (14) zugeordnet sind, um Berührungsdruckbelastungen auf den Fahrer (C) zu bewirken, wobei erste aufblasbare Kissen (15) den Kontaktflächen (14) zugeordnet sind und zweite aufblasbare Kissen (18) Einfassungsabschnitten (17) zugeordnet sind, die im Hinblick auf die Kontaktflächen (14) quer vorstehen, **dass** eine Steuerungs- und Befehlseinheit (20) mit den Bewegungsvorrichtungen (31), mit der Fahrsteuerungseinheit (32) und zumindest mit der Pumpeneinheit (19) verbunden ist und die Fahrsteuerungseinheit (32) und die Pumpeneinheit (19) selektiv steuert und die dynamischen Belastungen der Bewegungsvorrichtungen (31) und die Berührungsdruckbelastungen der aufblasbaren Kissen (15, 18) auf den Fahrer (C) miteinander kombiniert, **und dass** die Betätigung der Pumpeneinheit (19) in Bezug auf die Betätigung der Bewegungsvorrichtungen (31) bestimmt wird.

9. Verfahren nach Anspruch 8, **dadurch gekennzeichnet, dass** es vorsieht, den Fahrer (C) am Sitz (11) mit Anschnallgurten (26) zu sichern und die Straffung der Anschnallgurte (26) an dem Fahrer (C) dadurch selektiv zu ändern, dass die Straffungswirkung mit der Steuerungs- und Befehlseinheit (20) gesteuert wird.

## Revendications

1. Appareil pour simuler la conduite de véhicules terrestres comprenant une plate-forme mobile (30) ; un siège (11) installé sur ladite plate-forme mobile (30) et pourvu de surfaces de contact (14) sur lesquelles, pendant l'utilisation, un conducteur (C) est positionné ; des éléments de commande de conduite (27, 28, 29, 34) qui peuvent être actionnés par ledit conducteur (C) pour simuler une action de conduite ; des dispositifs de déplacement (31) configurés pour déplacer ladite plate-forme mobile (30) par rapport à un plan de support (35) et pour induire des contraintes dynamiques sur ledit conducteur (C) ; et une unité de commande d'entraînement (32) reliée auxdits éléments de commande d'entraînement (27, 28, 29, 34) et auxdits dispositifs de déplacement (31) en fonction des actions du conducteur (C) sur ledit élément de commande de conduite (27, 28, 29, 34), **caractérisé en ce que** des coussins gonflables (15, 18) sont associés à au moins certaines desdites surfaces de contact (14) et sont reliés fluidiquement à une unité de pompage (19) configurée pour commander la pression d'un gaz à l'intérieur desdits coussins gonflables (15, 18) et pour induire des contraintes de pression tactiles sur ledit conducteur (C), **et en ce que** ledit siège (11) comprend un plan d'assise (12) et un dossier (13) muni desdites surfaces de contact (14) et auquel sont associés des premiers coussins gonflables (15), reliés fluidiquement à ladite unité de pompage (19), dans lequel en correspondance avec leurs bords latéraux respectifs (16), ledit plan d'assise (12) et ledit dossier (13) sont pourvus de parties de retenue latérales (17) faisant saillie transversalement par rapport auxdites surfaces de contact (14), des seconds coussins gonflables (18) étant associés auxdites parties de retenue (17) et reliés à ladite unité de pompage (19) pour contrôler la pression du gaz à l'intérieur desdits seconds coussins gonflables (18), **et en ce qu'il** comprend une unité de contrôle et de commande (20) reliée auxdits dispositifs de déplacement (31), à ladite unité de commande d'entraînement (32) et à au moins ladite unité de pompage (19) et configuré pour commander sélectivement ladite unité de commande d'entraînement (32) et ladite unité de pompage (19) et pour combiner les contraintes dynamiques desdits dispositifs de mouvement (31) et les contraintes de pression tactiles desdits coussins gonflables (15, 18) sur ledit conducteur (C), l'actionnement de ladite unité de pompage (19) étant déterminé en relation avec l'actionnement desdits dispositifs de mouvement (31).

2. Appareil selon la revendication 1, **caractérisé en ce que** ladite unité de contrôle et de commande (20) comprend et met en œuvre un algorithme de couplage capable de gérer, en temps réel, au moins les accélérations de mouvement de ladite plate-forme mobile (30) et les contraintes de pression tactiles desdits coussins gonflables (15, 18), en coordonnant l'actionnement desdits dispositifs de mouvement (31) et de ladite unité de pompage (19).

3. Appareil selon la revendication 1 ou 2, **caractérisé en ce qu'il** comprend des ceintures de sécurité (26) associées audit siège (11) et configurées pour sécuriser ledit conducteur (C), **et en ce que** lesdites ceintures de sécurité (26) sont reliées à un dispositif de serrage (33) configuré pour faire varier de manière sélective le serrage desdites ceintures de sécurité (26) sur ledit conducteur (C), ledit dispositif de serrage (33) étant relié à ladite unité de contrôle et de commande (20).

4. Appareil selon la revendication 1, **caractérisé en ce que** ladite unité de contrôle et de commande (20) est configurée pour contrôler sélectivement et indépendamment la pression desdits premiers coussins gonflables (15) et desdits seconds coussins gonflables (18).

5. Appareil comme dans toute revendication ci-dessus, **caractérisé en ce que** ladite unité de pompage (19) comprend un dispositif de pompage (21) dudit gaz, connecté fluidiquement à un dispositif de distribution (22), ledit dispositif de distribution (22) étant connecté, par des tuyaux respectifs (23), auxdits premiers coussins gonflables (15) et auxdits seconds coussins gonflables (18), **et en ce que** ladite unité de commande et de contrôle (20) est connectée audit dispositif de distribution (22) pour contrôler sélectivement l'alimentation dudit gaz vers lesdits premiers coussins gonflables (15) et lesdits seconds coussins gonflables (18).

6. Appareil selon la revendication 5, **caractérisé en ce que** ledit dispositif de distribution (22) comprend des soupapes de distribution (24) et des soupapes de décharge (25) reliées fluidiquement auxdits premiers coussins gonflables (15) et auxdits seconds coussins gonflables (18) et pouvant être commandées sélectivement par ladite unité de commande et de contrôle (20) pour commander respectivement l'introduction et la décharge dudit gaz vers/depuis lesdits premiers coussins gonflables (15) et lesdits seconds coussins gonflables (18).

7. Appareil comme dans toute revendication ci-dessus, **caractérisé en ce que** lesdits éléments de commande de conduite sont choisis dans un groupe comprenant au moins un parmi soit un volant (27), une pédale de frein (28), un embrayage (29) ou une pédale d'accélérateur (34).

8. Procédé de simulation de conduite de véhicules terrestres qui prévoit d'installer un siège (11) sur une plate-forme mobile (30), de positionner un conducteur (C) sur des surfaces de contact (14) dudit siège (11), de détecter les actions dudit conducteur (C) sur des éléments de commande de conduite (27, 28, 29, 34), de traiter les actions dudit conducteur (C) sur lesdits éléments de commande de conduite (27, 28, 29, 34) avec une unité de commande de conduite (32), et de déterminer l'actionnement de dispositifs de déplacement (31) pour déplacer ladite plate-forme mobile (30) par rapport à un plan de support (35) en fonction des actions dudit conducteur (C) sur lesdits éléments de commande de conduite (27, 28, 29, 34) et pour induire des contraintes dynamiques sur ledit conducteur (C), **caractérisé en ce qu'il** prévoit, en utilisant une unité de pompage (19), de contrôler la pression d'un gaz à l'intérieur de coussins gonflables (15, 18) associées à au moins certaines desdites surfaces de contact (14) afin d'induire des contraintes de pression tactiles sur ledit conducteur (C), des premiers coussins gonflables (15) étant associés auxdites surfaces de contact (14) et des seconds coussins gonflables (18) étant associés à des parties de retenue (17) faisant saillie transversalement par rapport auxdites surfaces de contact (14), **en ce qu'**une unité de contrôle et de commande (20) est connectée auxdits dispositifs de déplacement (31), à ladite unité de commande d'entraînement (32) et à au moins ladite unité de pompage (19) et commande sélectivement ladite unité de commande d'entraînement (32) et ladite unité de pompage (19) et combine l'une par rapport à l'autre les contraintes dynamiques desdits dispositifs de mouvement (31) et les contraintes de pression tactiles desdits coussins gonflables (15, 18) sur ledit conducteur (C), **et en ce que** l'actionnement de ladite unité de pompage (19) est déterminé en relation avec l'actionnement desdits dispositifs de mouvement (31).

9. Procédé selon la revendication 8, **caractérisé en ce qu'il** prévoit de sécuriser ledit conducteur (C) audit siège (11) avec des ceintures de sécurité (26) et de varier sélectivement le serrage desdites ceintures de sécurité (26) sur ledit conducteur (C) en contrôlant l'action de serrage avec ladite unité de contrôle et de commande (20).
